# EUROPEAN PATENT SPECIFICATION

(11) **EP 0 773 463 B1**
(45) Date of publication and mention of the grant of the patent: **23.12.1998**
(21) Application number: 96112789.1
(22) Date of filing: 08.08.1996
(51) Int. Cl.: G02C 9/00

(54) **Auxiliary lenses for eyeglasses**
Vorsatz für Sehhilfen
Lentilles auxiliaires pour lunettes

(30) Priority: 07.11.1995 US 554854
(43) Date of publication of application: 14.05.1997
(73) Proprietor: Chao, Richard, Chia Yi Hsien (TW)
(72) Inventor: Chao, Richard, Chia Yi Hsien (TW)
(74) Representative: Casalonga, Axel

(56) References cited:
- WO-A-90/09611
- DE-A- 1 797 366
- DE-A- 4 316 698
- DE-U- 8 806 898
- DE-U-29 518 590
- US-A- 5 416 537
- PATENT ABSTRACTS OF JAPAN vol. 95, no. 005 & JP 07 128620 A (SAN RIIBU:KK), 19 May 1995,

## Description

The invention relates to auxiliary lenses for attaching to the eyeglasses.

Typical spectacle frames known for example by JP-A-07 128 620 include a magnetic material secured to the peripheral portion or the side portion for attaching an auxiliary frame to the spectacle frame. The auxiliary frame includes a magnetic strip for engaging with the magnetic material of the spectacle frame. However, the auxiliary frame may be easily disengaged from the frames when the users are jumping. In addition, the magnetic materials are embedded in the frames such that the frames should be excavated with cavities for engaging with the magnetic members and such that the frames are weakened.

The invention is to provide an auxiliary frame which may be stably engaged on the frames.

As claimed, an eyeglasses device comprises a spectacle frame and an auxiliary frame for supporting lenses, the spectacle frame including two first magnetic members and two side portions, each of said side portions having an extension for pivotally coupling a leg, the auxiliary frame including two arms each securing a respective second magnetic member for engaging with a respective one of said first magnetic members

According to the invention, the spectacle frame includes two projections each secured to the rear part of a respective one of said two side portions and each securing a respective one of said first magnetic members, each arm of the auxiliary frame engages over the upper part of a respective one of said two side portions each arm being supported on the upper part of a respective one of said two side portions to prevent the auxiliary frame from moving downward relative to the spectacle frame.
FIGS. 1 and 2 are front views of a spectacle frame and of an auxiliary frame respectively;
FIGS. 3 and 4 are top views of the spectacle frame and the auxiliary frame respectively;
FIG. 5 is a front view of the frame combination;
FIG. 6 is a top view of the frame combination; and
FIG. 7 is a cross sectional view taken along lines 7-7 of FIG. 6.

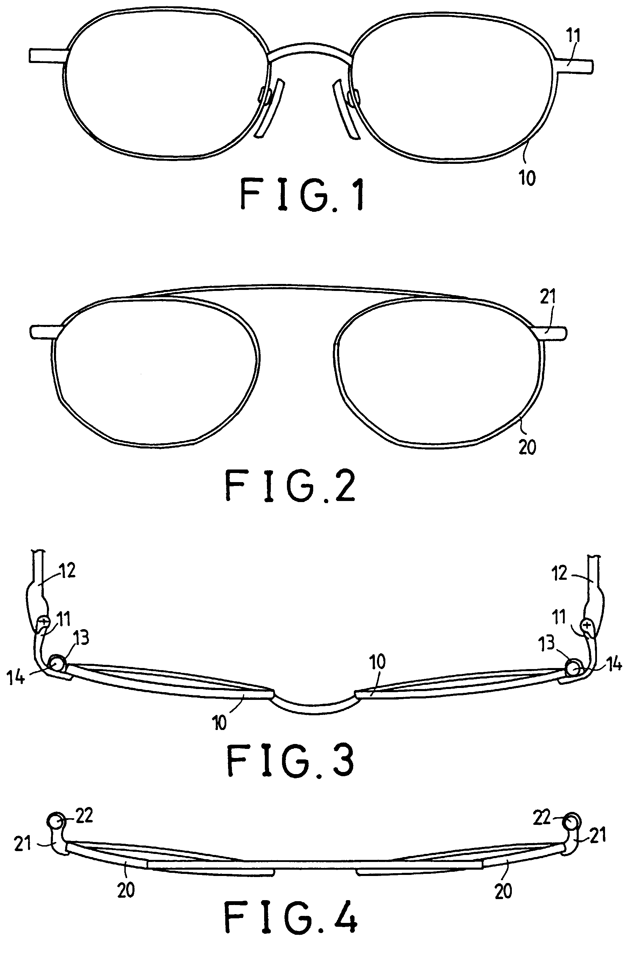

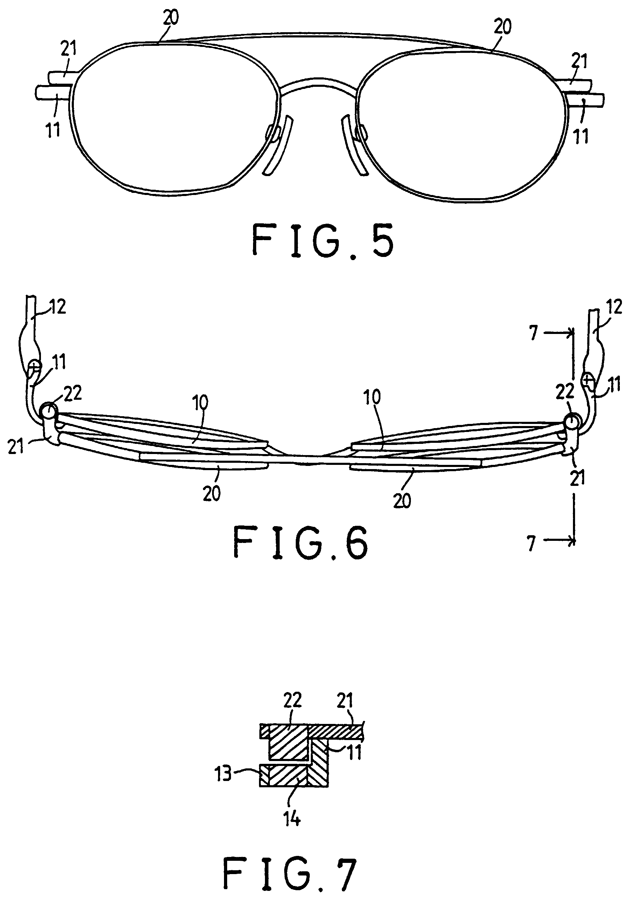

In FIGS. 1 to 4, an eyeglass device comprises a spectacle frame 10 and an auxiliary frame 20 for supporting lenses. The spectacle frame 10 includes two extensions 11 extended from the side portions for pivotally coupling two legs 12. The spectacle frame 10 includes two projections 13 secured to the side portions for supporting magnetic members 14. The auxiliary frame 20 includes two side portions each having an arm 21 engaged with the upper portion of the spectacle frame 10 (FIGS. 5 and 6). The auxiliary frame 20 includes two magnetic members 22 secured to the arms 21 for engaging with the magnetic members 14 such that the auxiliary frame 20 may be stably supported on the spectacle frame 10, best shown in FIGS. 5 and 6.

The arms 21 are engaged on the spectacle frame 10 for stably supporting the auxiliary frame 20 on the spectacle frame 10. The auxiliary frame 20 will not move downward relative to the spectacle frame and will not be easily disengaged from the spectacle frame when the users are jumping. The magnetic members 14, 22 are not embedded in the frames 10, 20 such that the strength of the frames 10, 20 will not be decreased.

In FIG. 7, the projections 13 and the magnetic members 14 are located lower than the upper portion of the spectacle frame 10; and the end portions of the arms 21 and/or the magnetic members 22 extend downward toward the projections 13 such that the arms 21 and the magnetic members 22 may hook on the spectacle frame 10 and such that the auxiliary frame 20 may further be stably supported and secured to the spectacle frame 10.

## Claims

1. An eyeglasses device comprising a spectacle frame (10) and an auxiliary frame (20) for supporting lenses, the spectacle frame (10) including two first magnetic members (14) and two side portions, each of said side portions having an extension (11) for pivotally coupling a leg (12), the auxiliary frame (20) including two arms (21) each securing a respective second magnetic member (22) for engaging with a respective one of said first magnetic members characterized that the spectacle frame (10) includes two projections (13) each secured to the rear part of a respective one of said two side portions and each securing a respective one of said first magnetic members (14), each arm (21) of the auxiliary frame (20) engages over the upper part of a respective one of said two side portions, each arm (21) being supported on the upper part of a respective one of said two side portions to prevent the auxiliary frame (20) from moving downward relative to the spectacle frame (10).

2. An eyeglasses device according to claim 1, wherein the projections (13) and the first magnetic members (14) are secured to the lower part of the side portions of the spectacles frame (10), the second magnetic members (22) are extended downward for hooking on the spectacle frame (10) so as to further secure the auxiliary frame (20) to the spectacle frame (10).

## Patentansprüche

1. Brillengerät, umfassend eine Brillenfassung (10) und eine Zusatzfassung (20) zum Haltern von Linsen, wobei das Brillengestell (10) zwei erste Magnetelemente (14) und zwei Seitenabschnitte einschließt, wobei jeder der Seitenabschnitte einen Fortsatz (11) zur schwenkbaren Befestigung eines Schenkels (12) aufweist, wobei die Zusatzfassung (20) zwei Arme (21) einschließt, die jeweils ein entsprechendes zweites Magnetelement (22) für einen Eingriff mit einem entsprechenden der ersten Magnetelemente befestigt, dadurch **gekennzeichnet**, daß die Brillenfassung (10) zwei Vorsprünge (13) einschließt, die jeweils an dem rückwärtigen Teil eines entsprechenden der beiden Seitenabschnitte befestigt sind und jeweils ein entsprechendes der ersten Magnetelemente (14) befestigen, wobei jeder Arm (21) der Zusatzfassung (20) über einen entsprechenden des oberen Teils eines entsprechenden der beiden Seitenabschnitte in Eingriff steht, wobei jeder Arm (21) auf dem oberen Teil eines entsprechenden der beiden Seitenabschnitte gehaltert ist, um zu verhindern, daß sich die Zusatzfassung (20) in bezug auf die Brillenfassung (10) nach unten bewegt.

2. Brillengerät nach Anspruch 1, bei dem die Vorsprünge (13) und die ersten Magnetelemente (14) am unteren Teil der Seitenabschnitte der Brillenfassung (10) befestigt sind, die zweiten Magnetelemente (22) nach unten verlängert sind für ein Einhaken auf der Brillenfassung (10), um die Zusatzfassung (20) weiter an der Brillenfassung (10) zu befestigen.

## Revendications

1. Dispositif de lunettes comprenant une monture de lunette (10) et une monture auxiliaire (20) servant à supporter des verres, la monture de lunette (10) comprenant deux premiers éléments magnétiques (14) et deux parties latérales, chacune desdites parties latérales comportant un prolongement (11) destiné à l'accouplement pivotant d'une branche (12), la monture auxiliaire (20) comprenant deux pattes (21) dont chacune maintient un deuxième élément magnétique respectif (22) destiné à coopérer avec l'un respectif desdits premiers éléments magnétiques,
caractérisé en ce que la monture de lunette (10) présente deux protubérances (13) dont chacune est fixée sur l'arrière de l'une respective desdites deux parties latérales et dont chacune maintient l'un respectif desdits premiers éléments magnétiques (14), chaque patte (21) de la monture auxiliaire (20) s'accroche sur la portion supérieure de l'une respective desdites deux parties latérales, chaque patte (21) étant supportée sur la portion supérieure de l'une respective desdites deux parties latérales afin d'empêcher la monture auxiliaire (20) de descendre par rapport à la monture de lunette (10).

2. Dispositif de lunettes de vue selon la revendication 1, dans lequel les protubérances (13) et les premiers éléments magnétiques (14) sont fixés à la portion inférieure des parties latérales de la monture de lunette (10) et les deuxième éléments magnétiques (22) s'étendent vers le bas pour s'accrocher sur la monture de lunette (10) afin de fixer davantage la monture auxiliaire (20) sur la monture de lunette (10).
